**Europäisches Patentamt**

**European Patent Office**

**Office européen des brevets**

(11) Publication number: **0 131 949**
**B1**

(12) **EUROPEAN PATENT SPECIFICATION**

(45) Date of publication of patent specification: **09.11.88**

(21) Application number: **84108353.8**

(22) Date of filing: **16.07.84**

(51) Int. Cl.⁴: **C 08 F 8/22, C 08 F 8/38**

(54) Preparation of highly elastomeric ethylene-acrylic ester copolymers.

(30) Priority: **15.07.83 US 514336**

(43) Date of publication of application:
**23.01.85 Bulletin 85/04**

(45) Publication of the grant of the patent:
**09.11.88 Bulletin 88/45**

(84) Designated Contracting States:
**AT BE CH DE FR GB IT LI NL SE**

(56) References cited:
**BE-A- 545 364**
**US-A-4 029 862**
**US-A-4 108 612**

(73) Proprietor: **UNION CARBIDE CORPORATION**
**39 Old Ridgebury Road**
**Danbury Connecticut 06817 (US)**

(72) Inventor: **Rifi, Mahmoud Rashad**
**28 Dawson Road**
**Kendall Park New Jersey 08824 (US)**

(74) Representative: **Barz, Peter, Dr. et al**
**Patentanwälte Dr. V. Schmied-Kowarzik Dipl.-**
**Ing. G. Dannenberg Dr. P. Weinhold Dr. D. Gudel**
**Dipl.-Ing. S. Schubert Dr. P. Barz**
**Siegfriedstrasse 8**
**D-8000 München 40 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a process for modifying ethylene-acrylic ester copolymers to make elastomeric products therefrom in a gas phase process. More particularly, this invention relates to a gas phase process for producing elastomers from ethylene-acrylic ester copolymers which will contain carbon-chlorine bonds, and, optionally, carbon-$SO_2Cl$ bonds.

High pressure ethylene-acrylic ester copolymers have been treated with chlorination and other modifying agents in aqueous or solvent slurry or solution processes to provide products having improved mechanical and chemical properties. See in this regard for example, US—A—2 405 971 and 3 960 821.

These chlorination type processes, however, suffer the obvious disadvantages involved in the use of solvents, i.e., the need to completely remove the solvents from the products, and usually under vacuum and/or elevated temperature conditions. These chlorination type processes may also require the use of elevated temperatures and/or the use of relatively large sized reactors, to accommodate the volume of solvent employed. US—A—3 770 706 and 4 220 739 disclose the surface sulfonation of various ethylene copolymers with relatively low amounts of modifying agents.

US—A—4 029 862 discloses the chlorination of certain highly crystalline ethylene hydrocarbon polymers in a gas phase fluidized bed process with gaseous chlorine. The data disclosed in the examples of this patent indicate that the products produced by the process of this patent are also highly crystalline materials, and that, by extrapolation apparently, as noted in Figure 17, in order to obtain a level of crystallinity of below about 20% according to the teachings of this patent it would be necessary to add over about 55% by weight of chlorine to the ethylene polymers disclosed therein.

BE—A—545 364 discloses a process for the chlorosulfonation of polyethylene which is also believed to result in a highly crystalline product.

None of such prior art procedures disclose a solventless gas phase process for producing elastomeric ethylene-acrylic ester copolymers, i.e., those having a crystallinity of less than 10% and a modulus, at 25°C of less than 13.8 MPa (2000 psi).

An object of the present invention is to provide a simple one-step process whereby elastomeric ethylene-acrylic ester copolymers containing relatively low amounts of sulfonyl chloride and/or chlorine can be readily prepared from particulate ethylene-acrylic ester copolymers with a minimum of reactants and under relatively mild reaction conditions.

A further object of the present invention is to provide a simple one-step process whereby elastomeric ethylene-acrylic ester copolymers containing a relatively low amount of modifying agents such as chlorine can be prepared from particulate ethylene-acrylic ester copolymers with a variety of treating agents.

A still further object of the present invention is to provide a process whereby elastomeric sulfonyl chloride and/or chlorine containing ethylene-acrylic ester copolymers can be readily prepared without the need for post treating such polymers to remove solvent or catalyst residues therefrom.

It has now been found that the objects of the present invention can be readily obtained if certain particulate copolymers of ethylene and acrylic esters are treated with certain chlorine containing modifying agents in a low pressure gas phase process as defined in Claim 1.

Crystalline ethylene copolymers

The ethylene-acrylic ester copolymers which are to be used in the process of the present invention are particulate materials formed from 50 to 99, and preferably 80 to 98, weight of ethylene and from 1 to 50, and preferably 2 to 20, weight % of one or more acrylic esters such as methyl acrylate, ethyl acrylate, butyl acrylate, methyl methacrylate and ethyl methacrylate.

These polymers have a modulus value of 13.79 to 137.9 MPa (2 000 to 20 000 psi) and preferably of 20.68 to 103.43 MPa (3 000 to 15 000 psi) and a crystallinity of 30 to 60, and preferably of 20 to 40%. For use in the process of the present invention they should be in granular form, i.e., having a particle size in the range of 150 to 1,000 µm, with the average particle size being 700±100 µm.

Process

The process of the present invention is a simple one-step process which is conducted in the gas phase in the absence of solvents or liquid diluents. The preferred of such gas phase processes are the fluidized or agitated bed type processes.

The process is conducted by treating or reacting the granular ethylene copolymers with a modifying agent which is adapted to being in the gaseous state under the operating conditions employed until the desired degree of treatment is achieved. The desired level of treatment is that which will cause sufficient amounts of the modifying agent to react with the ethylene copolymer as to result in the lowering of the crystallinity of such polymer to the level of no more than 10%, and preferably, of the order of 0 to 4%. The modifying agents cause a lowering of the crystallinity, and thus of the modulus, of the starting polymer it is believed, by randomly replacing hydrogen atoms on the polymeric backbones with more bulky groups, Cl and $SO_2Cl$.

The time required for this to occur will vary from 3 to 10 hours depending, in part, on the particular modifying agent and/or ethylene copolymer employed and the copolymer's particle size. Thus, the lower the crystallinity, and the smaller the particle size of the copolymer, the faster will the modification process proceed. The temperature to be used is in the range of 50 to 100°C and the pressure to be used is in the range of from atmospheric pressure up to 6.9 MPa (1000 psi). The pressure should also be one at which none of the reactants or by-products will condense under the overall reaction condition scheme. The higher the pressure and temperature, the shorter will be the reaction time, if all the other conditions are the same.

The modifying agents that may be used would include:

for chlorination: $Cl_2$

for chlorosulfonation: $SO_2Cl_2$ or $SO_2$ plus $Cl_2$.

The process can be conducted without an initiator. If the use of an initiator is desired the preferred initiator is an azobisisobutyronitrile.

As a result of the chlorination treatment, the chlorinated polymers will contain carbon-chlorine bonds randomly distributed throughout the backbone of the polymer. In such products the chlorine concentration will range between 5 to 55 weight %, and preferably between 15 to 30 weight %. As a result of the chlorosulfonation treatment, the backbone of the chlorosulfonated polymers will contain randomly distributed carbon-chlorine bonds and carbon-$SO_2Cl$ bonds. In the chlorosulfonated polymers, the total chlorine concentration will range from 5 to 55 weight %, and preferably from 15 to 30 weight %, and the sulfur content will range from 0.1 to 10 weight %, and preferably from 0.5 to 5 weight %.

The amount of the gaseous modifying agent to be used in the reactor relative to the amounts of the granular copolymers to be treated therewith is 10 to 200, and preferably of 20 to 100, weight %. When $SO_2$ and $Cl_2$ are used as the modifying agent the molar ratio of $Cl_2$ to $SO_2$ to be used is 5:1 to 10:1 and preferably 5:1. 10 to 50 volume % of an inert gas such as nitrogen may be used in conjunction with the gaseous modifying agent.

It has been found that after the modified, elastomeric copolymers are made in the process of the present invention it is much easier to remove any residual unreacted materials such as monomer or modifying agent, or HCl by-product, from the copolymer by merely flushing them out with an inert gas such as nitrogen. Since there are no components of the reaction system, other than monomer, modifying agent(s), HCl by-product, and, optionally, inert gas, used in the process of the present invention, such as solvents, diluents, swelling agents, fluidizing agents, or catalysts, there is no need to expend any efforts to remove any materials of these latter types from the elastomeric product.

The properties of the copolymers discussed herein were determined by the following test methods:

| | |
|---|---|
| Crystallinity | Measured by Differential Scanning Calorimeter (DSC) using a DuPont-990 analyzer with pressure DSC cell |
| Tensile Modulus, MPa (psi) | 1% secant modulus; a film 10.16×10.16×0.05 cm (4″×4″×0.020″) is compression molded at 130—150°C. and its modulus is measured according to ASTM-638. |
| Tensile Strength, MPa (psi) | A similar film, prepared as described above for tensile modulus, is tested according to ASTM-638. |
| %Elongation at Break | A similar film, prepared as described above for tensile modulus and tensile strength, is elevated according to ASTM-638. |

The following Examples are provided to illustrate the process of the present invention and are not intended as a limitation upon the scope thereof.

The ethylene-acrylic ester copolymer used in the examples was a copolymer of 82 weight % ethylene and 18 weight % ethyl acrylate made with a free radical initiator under high pressure conditions. This copolymer was 32% crystalline, had a tensile modulus of 38.34 MPa (5 560 psi), a tensile strength of 15.86 MPa (2 300 psi), an elongation of 919% and was in the form of particles having an average particle size of 500 microns.

Apparatus/process

The ethylene ethyl acrylate copolymers were chlorinated or chlorosulfonated in a two liter glass-lined stainless steel or Hastelloy (55Ni, 17Mo, 16Cr, 6Fe, 4W) reactor equipped with a thermocouple thermometer and a motor activated U shaped Hastelloy stirrer.

A Hastelloy dip tube (~2 cm in diameter) was used to feed the gaseous modifying agent(s) into the reactor. Unreacted modifying agent and HCl were vented to a collection trap containing 25% aqueous NaOH. The gaseous modifying agents were fed at the rate of 10 to 12 g $Cl_2$ per hour and 2—3 g $SO_2$/hour under a pressure of 103.4 to 3102.7 kPa (15 to 450 psi). The polymer to be treated, 100 to 200 g, was charged to the reactor and heated therein by an external heater. No catalysts were used in any of these experiments.

After the polymer was added to the reactor and heated to the desired reaction temperature the resin was agitated by the stirrer and the gaseous modifying agent(s) were fed in. During the course of the modifying process samples of the modified resin were taken from the reactor to test for S and and/or Cl content, and % crystallinity. When the modification process had proceeded to the point where the crystallinity of the resin had reached less than about 10% the flow of gaseous modifying agent(s) was terminated and the product was allowed to cool in the reactor while being purged with nitrogen to remove $SO_2$ and/or $Cl_2$ and HCl.

# 0 131 949

Example 1

In this example the ethylene-ethyl acrylate (EEA) copolymer was chlorinated at ~70°C for up to ~10 hours, until it acquired a chlorine content of 21 weight %. The properties of the starting material, and of an intermediate product, and of the final product were as follows:

TABLE 1
Properties of chlorinated EEA

| Resin: | Starting material | Intermediate Product | Final Product |
|---|---|---|---|
| Cl, % | 0 | 10 | 21 |
| Crystallinity, % | 32 | 15 | 6 |
| Tensile modulus, psi | 5 560 | 3 020 | 1 800 |
| MPa | 38.4 | 20.8 | 12.4 |
| Tensile strength psi | 2 300 | 1 410 | 900 |
| MPa | 15.8 | 9.7 | 6.2 |
| Elongation, % | 919 | 483 | 287 |

MPa=Mega Pascal

The data of this Example 1 indicates that ethylene ethyl acrylate copolymer can be easily chlorinated, in accordance with the present invention, to give elastomeric products having a crystallinity below 10%, and a modulus of less than 13.79 MPa (2000 psi).

Example 2

In this example a series of five different chlorosulfonated products were made from five different batches of the same starting copolymer. In each case the copolymer was chlorosulfonated at 60—70°C for 6—10 hours. The properties of the starting material and of each of the final products were as follows:

Properties of chlorosulfonated EEA

| Resin: | Starting material | Final product | | | | |
|---|---|---|---|---|---|---|
| | | 1 | 2 | 3 | 4 | 5 |
| Properties: Cl, % | 0 | 16 | 24 | 28 | 29 | 30 |
| S, % | 0 | 0.85 | 0.45 | 0.15 | 0.9 | 2.2 |
| Crystallinity, % | 32 | 6 | <10 | 5.4 | 3 | 5 |
| Tensile modulus at ~25°C, psi | 5 560 | 1 810 | 1 350 | 1 100 | 885 | 900 |
| MPa | 38.4 | 12.5 | 9.3 | 7.6 | 6.1 | 6.2 |
| Tensile strength, psi | 2 300 | 1 360 | 1 300 | 830 | 850 | 1 210 |
| MPa | 15.9 | 9.4 | 9.0 | 5.7 | 5.9 | 8.3 |
| Elongation, % | 919 | 742 | 660 | 340 | 527 | 494 |

The data of this Example 2 shows that ethylene ethyl acrylate copolymers can be easily chlorosulfonated, according to the present invention, to produce elastomeric products with moduli less than 13.79 MPa (2000 psi) and crystallinity less than 10%.

4

Example 3

The elastomeric products produced by the process of the present invention have a wide variety of uses because of their flexibility, chemical resistance and flame retardancy. They may be used, for example, as wire and cable insulation and as plasticizers for polyvinyl chloride resins.

A chlorinated ethylene-ethyl acrylate copolymer, made by the process of the present invention was used as the base resin in a cured wire and cable jacket formulation. The chlorinated ethylene-ethyl acrylate copolymer was formed from a starting resin which contained 82 weight % ethylene and 18 weight % ethyl acrylate and was 32% crystalline and had a modulus of 38.34 MPa (5560 psi). The chlorinated material contained 21 weight % chlorine, had a 3% crystallinity and had a modulus value of 6.2 MPa (900 psi).

The wire and cable jacket formulation was as follows:

| PPW | |
|---|---|
| 79.4 | chlorinated ethylene-ethyl acrylate copolymers |
| 20.0 | $CaCO_3$ (filler) |
| 0.6 | Azerite MA (stabilizer) |
| 100.0 | |

The formulation was then cured according to the procedure described in the Example of US—A—4 328 323 using silane to produce a cured product having the following properties:

| | |
|---|---|
| Tensile strength, MPa (psi) | 9.31 (1350) |
| Elongation, % | 400 |
| Tensile modulus, MPa (psi) | |
| at 23°C | 4.83 (700) |
| at 90°C | 1.24 (180) |
| at 250°C | 1.59 (230) |
| Flammability (ASTM-D 2863-70) | |
| Limiting oxygen index (LOI) | 31 |
| Smoke | 10 |
| Ash | 12 |

The data of this Example 3 shows that formulated products made from chlorinated copolymers prepared according to the process of the present-invention have utility in the wire and cable area. Such formulated products have excellent room temperature flexibility, which· is retained at elevated temperatures. Furthermore, such formulated products also have good flame retardent properties.

**Claims**

1. A process for modifying ethylene-acrylic ester copolymer to produce elastomers therefrom which comprises treating

granular ethylene-acrylic ester copolymer having a particle size of 150 to 1000 microns said polymer containing 50 to 99 weight % ethylene and 1 to 50 weight % of at least one acrylic ester and having modulus of at least 13.79 MPa (2000 psi) in a gas phase process

with at least one chlorine containing modifying agent selected from chlorinating and chlorosulfonating agents

said agent being adaptable to being in the gas phase during said process,

until sufficient amounts of said agents are reacted with said copolymer as to lower its crystallinity to no more than 10%.

2. A process as in claim 1 wherein said polymer is treated with a chlorinating agent.

3. A process as in claim 2 wherein said polymer is treated with sufficient amounts of chlorinating agent as to produce a polymer containing 5 to 55 weight % of chlorine.

4. A process as in claim 1 wherein said polymer is treated with a chlorosulfonating agent.

5. A process as in claim 4 wherein said polymer is reacted with sufficient amounts of chlorosulfonating agent as to produce a polymer containing 5 to 55 weight % of chlorine, and 0.1 to 10 weight % of sulfur.

6. A process as in any of claims 1 to 5 wherein said copolymer is a copolymer of ethylene and at least one acrylic ester selected from methyl acrylate, ethyl acrylate, butyl acrylate, methyl methacrylate and ethyl methacrylate.

7. A process as in claim 6 wherein said acrylic ester is ethyl acrylate.

8. Chlorosulfonated ethylene-acrylic ester copolymer containing 5 to 55 weight % of chlorine and 0.1 to 10 weight % of sulfur, and having a modulus of less than 13.79 MPa (2000 psi), at 25°C, and being less than 10% crystalline.

9. Chlorosulfonated ethylene-ethyl acrylate copolymer as in claim 8.

10. A product obtainable by the process of any of claims 1 to 7.

**Patentansprüche**

1. Verfahren zur Modifizieren von Ethylen-Acrylester-Copolymeren zur Herstellung von Elastomeren daraus, welches umfaßt die Behandlung eines körnigen Ethylen-Acrylester-Copolymers mit einer Teilchengröße von 150 bis 1000 µm, welches 50 bis 99 Gew.-% Ethylen und 1 bis 50 Gew.-% mindestens eines Acrylesters enthält und ein Modul von mindestens 13,79 MPa (2000 psi) hat, in einem Gasphasenprozeß mit mindestens einem chlorhaltigen Modifizierungsmittel, ausgewählt unter Chlorierungs- und Chlorsulfonierungsmittel, welche geeignet sind, während des Verfahrens in der Gasphase vorzuliegen, bis ausreichende Menge der Mittel mit dem Copolymer reagiert haben, um seine Kristallinität auf nicht mehr als 10% zu senken.

2. Verfahren nach Anspruch 1, worin das Polymer mit einem Chlorierungsmittel behandelt wird.

3. Verfahren nach Anspruch 2, worin das Polymer mit ausreichenden Mengen an Chlorierungsmittel behandelt wird, um ein Polymer zu erhalten, das 5 bis 55 Gew.-% Chlor enthält.

4. Verfahren nach Anspruch 1, worin das Polymer mit einem Chlorsulfonierungsmittel behandelt wird.

5. Verfahren nach Anspruch 4, worin das Polymer mit ausreichenden Mengen an Chlorsulfonierungsmittel behandelt wird, um ein Polymer zu ergeben, das 5 bis 55 Gew.-% Chlor und 0,1 bis 10 Gew.-% Schwefel enthält.

6. Verfahren nach irgendeinem der Ansprüche 1 bis 5, worin das Copolymer ein Copolymer von Ethylen und mindestens einem Acrylester, ausgewählt unter Methylacrylat, Ethylacrylat, Butylacrylat, Methylmethacrylat und Ethylmethacrylat, ist.

7. Verfahren nach Anspruch 6, worin der Acrylester Ethylacrylat ist.

8. Chlorsulfoniertes Ethylen-Acrylester-Copolymer, enthaltend 5 bis 55 Gew.-% Chlor und 0,1 bis 10 Gew.-% Schwefel, das ein Modul von weniger als 13,79 MPa (2000 psi) bei 25°C hat und weniger als 10% kristallin ist.

9. Chlorsulfoniertes Ethylen-Ethylacrylat-Copolymer nach Anspruch 8.

10. Produkt, erhältlich nach dem Verfahren irgendeines der Ansprüche 1 bis 7.

**Revendications**

1. Procédé de modification d'un copolymère d'éthylène et d'ester acrylique en vue de produire des élastomères à partir de ce copolymère, qui consiste à traiter
un copolymère granulaire d'éthylène et d'ester acrylique ayant des diamètres de particules de 150 à 1000 micromètres, ledit polymère contenant 50 à 99% en poids d'éthylène et 1 à 50% en poids d'au moins un ester acrylique et ayant un module d'au moins 13,79 MPa (2000 lb/in$^2$) dans un procédé en phase gazeuse
avec au moins un agent modificateur contenant du chlore, choisi entre des agents de chloration et de chlorosulfonation,
ledit agent pouvant être rendu apte à se trouver en phase gazeuse au cours dudit procédé,
jusqu'à ce que des quantités suffisantes desdits agents aient réagi avec ledit copolymère pour abaisser sa cristallinité à une valeur ne dépassant pas 10%.

2. Procédé suivant la revendication 1, dans lequel le polymère est traité avec un agent de chloration.

3. Procédé suivant la revendication 2, dans lequel le polymère est traité avec des quantités suffisantes d'agent de chloration pour produire un polymère contenant 5 à 55% en poids de chlore.

4. Procédé suivant la revendication 1, dans lequel le polymère est traité avec un agent de chlorosulfonation.

5. Procédé suivant la revendication 4, dans lequel le polymère est amené à réagir avec des quantités suffisantes d'agent de chlorosulfonation pour produire un polymère contenant 5 à 55% en poids de chlore, et 0,1 à 10% en poids de soufre.

6. Procédé suivant l'une quelconque des revendications 1 à 5, dans lequel le copolymère est un copolymère d'éthylène et d'au moins un ester acrylique choisi entre l'acrylate de méthyle, l'acrylate d'éthyle, l'acrylate de butyle, le méthacrylate de méthyle et le méthacrylate d'éthyle.

7. Procédé suivant la revendication 6, dans lequel l'ester acrylique est l'acrylate d'éthyle.

8. Copolymère éthylène-ester acrylique chlorosulfoné, contenant 5 à 55% en poids de chlore et 0,1 à 10% en poids de soufre, et ayant un module de moins de 13,79 MPa (2000 lb/in$^2$), à 25°C, et dont la cristallinité est inférieure à 10%.

9. Copolymère éthylène-acrylate d'éthyle chlorosulfoné suivant la revendication 8.

10. Produit pouvant être obtenu par le procédé suivant l'une quelconque des revendications 1 à 7.